# EUROPEAN PATENT SPECIFICATION

(11) **EP 2 405 260 B1**
(45) Date of publication and mention of the grant of the patent: **07.05.2014**
(21) Application number: 11173192.3
(22) Date of filing: 08.07.2011
(51) Int. Cl.: G01N 23/10, G01N 23/087, G06T 5/50, G06T 5/40, G01V 5/00, G01T 1/24

(54) **Method and apparatus for performing non-invasive x-ray inspections of objects**
Methode und Gerät zur Durchführung nicht-invasiver Objektprüfung
Procédé et dispositif pour l'examen non-invasif des objets

(30) Priority: 09.07.2010 IT MI20101269
(43) Date of publication of application: 11.01.2012
(73) Proprietor: Xnext S.r.l., 20139 Milano (IT)
(72) Inventor: Pozzi, Pietro, 20062 Cassano d'Adda - Milano (IT); Rotondo, Giuseppe, 20090 Pantigliate (IT); Borghese, Nunzio Alberto, 20129 Milano (IT)
(74) Representative: Herrmann, Franz

(56) References cited:
- WO-A2-2006/117720
- US-A- 6 018 562
- US-A1- 2006 140 340
- US-A1- 2009 290 680
- US-A1- 2010 166 139

## Description

The invention relates to a method for performing a non invasive x-ray inspection of objects, comprising the method steps of:
- providing at least one x-ray source emitting a polychromatic x-ray beam incident on the object under inspection;
- providing at least one x-ray detector composed by detector elements located side by side and capable of intercepting the radiation modified by the object under inspection and producing, for each detector element, attenuation data associated to at least two energy bands;
- providing a computation unit for performing an elaboration process on the attenuation data acquired from the at least one detector and for reconstructing radiographic images of the objects under inspection as well as information about their volume and composition, wherein
- for each detector element, the attenuation data are available in the form of radiation intensities associated to one energy band within a range of at least four energy bands of the x-ray spectrum of the x-ray beam and constituting the spectral signature of the attenuation data generated by the detector element, and wherein
- the elaboration process includes the steps of identification of homogeneous material clusters of the object, and of comparison by an expert system between such spectral signature of said clusters and the spectral signature of at least one target material.

The invention further relates to an apparatus for implementing the method.

### DESCRIPTION OF PRIOR ART

Such a method and such an apparatus are known from US 6 018 562 A. In the known method and in the known apparatus, multi-spectral X-ray views of an object are produced using stationary polychromatic x-ray sources and a linear array of detectors. Multispectral CT-images are reconstructed from the x-ray views of the object. Contiguous or near contiguous voxels with similar spectral properties are grouped. Based on the spectral properties of the groups of voxels and based on shape, size and texture of these groups, associated objects are identified.

The problematic referred to the identification of threat objects and materials, as well as contraband goods, inside baggage and transport crates (in cargo and containers) is of great actuality within the frame of the contrast to terrorism, contraband and falsification.

The x-ray based security control systems are worldwide largely adopted, and have demonstrated their efficacy in the identification of suspect solid objects inside a baggage. They result however still slow and subject to false alarms in the identification of liquid materials that may be used as compounds for IED (Improvised Explosive Devices). A solution to such problem that is of effective and fast execution would be of utmost usefulness for the improved contrast to the recent evolution of the terroristic technique.

The limitation of the current methods mainly arises from the fact that they aim to identify the objects based on the physical properties (equivalent atomic number or density) but not on the chemical properties. For this reason the systems of the prior art are characterized by a large number of false alarms and have limited possibility to discriminate between substances having similar physical properties, such as for example the simple water and the hydrogen peroxide.

Different systems and methods have been proposed by the prior art. We can first distinguish between systems based on Computerized Tomography (CT) and systems based on conventional x-ray scanning both with single or multi view.

The CT systems produce images of object sections by volume reconstruction based on absorption measures acquired at different angles around the same object. The method is widely adopted in the medical field, while it results excessively slowly for the security inspections, especially for the hand baggage inspections.

The patent US 5,367,552 proposes a CT system preceded by a conventional scanning capable of identifying the critical areas to undergo subsequent CT scanning. The system is in this way capable to focus the CT scanning on specific areas reducing the execution time, and also providing a series of automatism to identify by evaluations of mass, volume and density the potential threat objects, to eventually undergo extended examination and analysis by x-ray diffractometry. Although such system improves the CT method, it however results slow and complex for the first level inspections on baggage and lines, not resolving hence the posed problematic.

The systems based on conventional x-ray scanning utilize a linear scanning method, typically by exposing the object in movement on a conveyor belt with a collimated x-ray beam, so creating bi-dimensional images where the under laying structures are overlapped.

A first improvement was realized by means of the so called dual energy methods.

The patent US 6,052,936 illustrates the effective adoption of such method in the medical field with large area bi-dimensional x-ray sensors to achieve, by exposure at two different energy levels and subsequent decomposition, two diagnostic images referred to different levels of structure composition, such as for example soft and bony tissues.

The patent US 6,069,936 proposes an inspection systems suitable also for inspections on containers, based on the irradiation with mono chromatic high energy x-rays at two different predefined energy levels and the acquisition of two attenuation profiles for each scanning line respectively corresponding to the two spectra of emitted radiation. Those profiles are analyzed between them, in order to identify the atomic number of the materials under examination.

The patent US 6,445,765 proposes a system for the identification of the chemical composition of a sample under examination, based on the irradiation by means of polychromatic x-rays and the detection of the absorption spectra by means of two distinguished sensors having optimized sensitivity respectively for high and low energy, in order to improve the separation between the two energy levels and at the same time to minimize the phenomena of persistence and optical dispersion in the scintillator that can reduce the image contrast.

A further improvement was introduced by the multiple views methods, where the baggage is linearly scanned from more views generally placed at orthogonal angles.

The patent US 6,236,709 proposes a three views system, one vertical and two horizontal at orthogonal angles, with dual energy. The elaboration system allows reconstruction with algebraic method of the object density data associated with the attenuations, while the atomic weight data are derived by the association with the dual energy scanning.

The above methods result however disadvantageous for the purpose of a correct material identification, due to the limited energy levels and the limited accuracy of determination of the atomic features of the objects under examination (in relation with the other objects placed inside the baggage), and the consequent erroneous results of the recognition algorithms.

The patent US 5.943,388 proposes an inspection system based on the use of sensors capable of providing a photon counting of the incident radiation associated at least with three energy levels, as well as ASIC (Application Specific Integrated Circuit) programmable devices, finalized to the reconstruction and identification of the materials under examination. It is however lacking of explanation about the method of analysis of the information and identification of the materials under examination.

The patent publication US 2009/0290680 proposes the use of the above sensors in configurations with high spatial or energy resolution for applications of reconstruction of bi-dimensional or tri-dimensional images in the fields of medical, industrial or security. Still lacks a specification of the method for the analysis of the information and the identification of the materials under examination.

Another family of systems and methods is based on the x-ray diffraction.

The patent US 6,118,850 proposes a system for the analysis of the structure of materials based on x-ray diffraction with Energy resolution (ER), where various volumes within the object under examination are irradiated with a polychromatic x-ray beam and the spectra of the diffracted radiation are acquired by means of a dedicated energy dispersion detector placed at predefined angles with the incident radiation. Such spectra are then undergoing a process of extraction of characterizing morphological features (among which for example peaks, troughs, and particular curves) and then a process of classification based on probabilistic technique aimed at associating the sample with minimum error to a group of known substances.

The patent US 7,092,485 proposes a system for the analysis of the structure of materials based on x-ray diffraction with mixed method at Energy and Angle resolution (EAR), capable of effectively utilizing the generated radiation and provide a rapid and accurate identification of the structure of the material under examination.

The system utilizes a collimated polychromatic x-ray beam and a dual energy detection system on the same primary x-ray beam, as well as a detector of the diffracted radiation with energy resolution placed at a plurality of angles versus the volume under examination, and a computerized system for the analysis of the acquired spectra and the comparison with the spectra of known substances aimed to reconstruction of an image of the objects under examination and indicate the presence of forbidden substances.

The patent US 7,020,242 proposes a system for the x-ray inspections with stationary object, capable of obtaining multiple views of the object under examination thanks to the capacity of computerized positioning of the x-ray source and the detector, prepared for the use of dual energy x-ray sources, bi-dimensional x-ray detectors, as well as complementary devices for the detection and analysis of the diffracted radiation.

The above systems are generally not adequate for first line inspections, but rather only for second line inspections on objects previously selected. They are also complex to utilize, slow and expensive, typically laboratory and not line instruments, and are however affected by the limited resolving power characteristic of the dual energy systems.

There is also a range of methods based on exposure to light radiation.

The patent US 7,002,681 proposes a spectroscopic system for the identification of the chemical species based on exposure to light of a sample under examination by means of a light source having one or more predefined wavelengths, and on the analysis of the signal emitted from the sample before and after a photo-chemical reaction that shifts the emission spectrum of the same signal.

It appears evident that the prior art has predominantly tried to exploit the methods of identification of the volume of the target objects and the association with the relevant density and atomic weight.

It has however missed to provide a comprehensive solution to the several concurrent requirements of the security and line inspections, among which:
- accurate and automatic determination of the chemical composition of the object under examination, whether solid or liquid;
- rapidity of execution of the inspections, with high throughput of the queues;
- simplicity of use by the operators;
- ease of installation, self-calibration and displacement in different locations;
- limited investment cost.

### BRIEF DESCRIPTION OF THE INVENTION

Proceeding from this related art, the present invention is based on the object to provide an improved method and apparatus for non invasive x-ray inspections of objects

This object is achieved by a method and an apparatus having the features of the independent claim. Advantageous embodiments and refinements are specified in claims dependent thereon.

In the method and the apparatus, the attenuation data are available for each detector element in the form of radiation intensities associated to one energy band within a range of at least four energy bands of the x-ray spectrum of the x-ray beam and constituting the spectral signature of the attenuation data generated by the detector element, and the elaboration process includes the steps of identification of homogeneous material clusters of the object, and of comparison by an expert system between such spectral signature of said clusters and the spectral signature of at least one target material.

The approach is thus based on the elaboration of the spatial data and the histogram data by a statistical and iterative method, in order to identify homogeneous substances, either solid or liquid, and determine their chemical composition with high level of accuracy.

For providing an error free determination of the chemical composition of the substances under examination, the inspection system of the present invention is realized by x-ray scanning the object under different levels of energy (multi band), and elaborating those images with a novel method capable of clustering homogeneous volumes in the space-energy domain, herein referred to as clusters (or blobs or super-blobs), and correlating them with known sets of target substances.

This approach allows the exact identification of the chemical composition of the objects under examination, and particularly the composition of the inner substances which can be considered as threat, contraband or adulterant.

The apparatus and the method for the non destructive x-ray inspections can advantageously be utilized in various fields of application such as security baggage screening or industrial line controls, as for example food or pharmaceutical production lines. An example for this type of analysis is the automatic identification of explosives or their components inside baggage or boxes in case of security controls, or of the adulterants in case of food controls, or of the wrong composition of receipt in case of pharmaceutical controls.

One embodiment of the invention is based on x-ray scanning of the objects under examination utilizing x-ray detectors capable of counting the photons incident on each spatial element, providing not only a measurement of the attenuation produced by the analyzed object, but also recognition of the individual photon energy and association of the counts to an histogram with predefined energy bands.

For adapting the recognition process to the particularities of the object, the at least four energy bands can dynamically be modified during the elaboration process in order to increase the reliability of the matching between the measured spectral signature of the object under inspection and the spectral signature of the predefined target material.

The polychromatic x-ray beam can be collimated by means of a primary collimator located between the x-ray source and the object and directing the x-ray beam to the object according to a predefined angle. Thus the geometry of the x-ray-beam is well defined and can be confined to a radiation sensitive area of the detector.

In one embodiment, the detector comprises at least one x-ray detector chain, composed by detector elements organized according to at least one linear array. Thus even voluminous objects can be examined. If the detector chain and the object perform a relative movement with respect to each other in a transverse direction with respect to the direction of extension of the linear array, the whole volume of the object can be examined, and the examination is not limited to a cross section of the object.

In one further embodiment two or more detector chains illuminated by two or more x-ray sources are used and the acquired data are processed in order to generate bi-dimensional and tri-dimensional radiographic images reconstructed for multiple energy bands. Thus, homogeneous volumes in the space-energy domain can better be resolved and correlated with known sets of target substances.

For the purpose of achieving the above described object of providing fast determination of the chemical composition and identification of specific target substances, the system and method of the present invention adopts a strategy of progressive analysis during the x-ray scanning providing early identification of the volumes associated with target substances and iterative statistical elaboration of the multi band image data with optimization of the computation time.

For the purpose of achieving the above described object of providing a significant aid to the operator, the system and method of the present invention provides automation of the entire inspection process, from the configuration and calibration of the system up to the identification of the objects associated with target substances, and their visualization and marking to the same operator.

### BRIEF DESCRIPTION OF THE DRAWINGS

The features and advantages of the present invention will result evident from the following detailed description of a preferred embodiment, illustrated as a non limiting example by the annexed figures, in which:
- Figure 1: represents the inspection system in the preferred stationary configuration supervised by an operator.
- Figure 2: is a block diagram representing the x-ray source composed by the x-ray generator and tube head.
- Figure 3: represents schematically the interior of the inspections system, with the x-ray source and the projection over the detection chain, split in multiple detector boards.
- Figure 4: is a block diagram of an individual detector board.
- Figure 5: represents schematically the layout of the CdTe or CZT detector.
- Figure 6: represents schematically the layout of a dual energy detector using scintillator and photodiodes.
- Figure 7: is an exemplary diagram showing the typical response of various detectors that can be used in the inspection system of the present invention.
- Figure 8: is an exemplary diagram showing the typical response of a CdTe detector for specified substances.
- Figure 9: represents schematically the geometric layout of the second x-ray source and detector chain, in a dual view inspection system.
- Figure 10: is a block diagram of the inspection system power supply components.
- Figure 11: represents the components of the inspection system operator console.
- Figure 12: is a flow chart of the principal operations of the inspection process.
- Figure 13: is a flow chart of the first level of the elaboration method.
- Figure 14: is a flow chart of the second level of the elaboration method.
- Figure 15: illustrates blobs and super-blobs used in the processing of the attenuation data..

### DETAILED DESCRIPTION

According to a preferred embodiment, the present invention is based on a conveyor belt for the transport of the object to be examined and an x-ray shielded cabinet where the object is exposed to the x-rays and the radiographic image is acquired and displayed on the screen of the operator console.

This configuration is of particular application in the security inspections, but can also usefully applied in any other military, civil and industrial inspection applications, such as for example food or pharmaceutical.

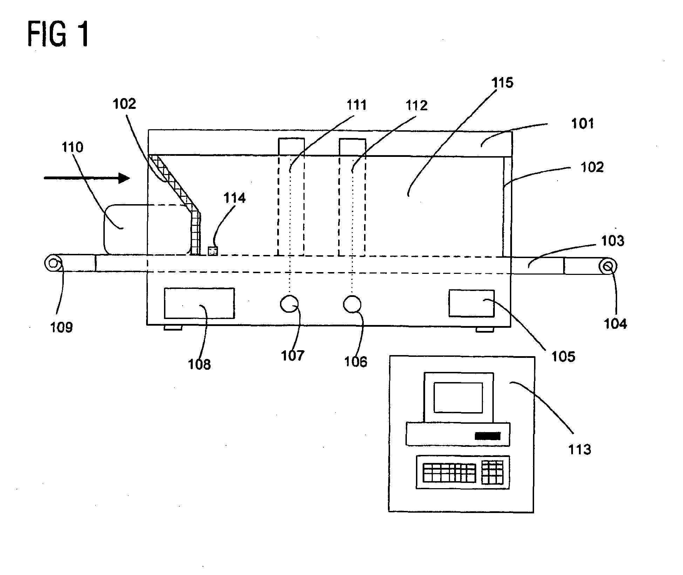

Referring to Figure 1, the inspection cabinet 101 consists of a metal structure, whose dimensions vary according to the dimensions of the objects to be analyzed.

It contains an inspection tunnel 115, where a first x rays source 107 is linked to a first x-ray detectors chain 111 to detect the radiation attenuated by the inspected objects according to a first projecting direction, and a second X rays source 106 is linked to a second x-ray detectors chain 112, to detect the radiation attenuated by the inspected objects according to a second projecting direction, different from the previous one.

It also contains an electrical supply unit 108 providing the necessary electric power to supply the system electronic circuits, and a control unit 105 which has the task to manage the different functions of the system, on the basis of the commands given by the operator through the operator console 113.

In particular the control unit 105 controls the movement of the conveyor belt 103, according to the request of inspection start up sent by the operator console 113, and starts the generation of synchronized x-rays from the sources 107 and 106 and the calibration and acquisition of the signals from the detectors chains 111 and 112. It is also possible to drive this function by a sensor of object presence, for example a photo detector 114 placed transversally to the object itself at the entry of the inspection tunnel.

The conveyor belt 103 is made in such a way as to create a sufficient friction with the object to be analyzed, so to enable the object to move without sliding, and has the peculiarity to be as much as radio transparent as possible, in order to permit that most of the radiation generated by the x-ray source hits the object to be analyzed. The conveyor belt is moved through a motor drive 109 placed at one end of the same, and an idle roll 104 placed at the other end.

The conveyor belt 103 forwards the object under examination 110 from the outside to the inside of the tunnel and then to the exit, passing through two series of plumbed curtains 102, each one placed respectively at the entry and at the exit of the tunnel, necessary to reduce the value of the radiation scattered outside of the system.

According to a typical operation sequence, the object to be examined is placed over the conveyor belt 103 and the operator starts the movement of the belt by pressing the relevant control on the keyboard.

The object on the belt passes through the plumbed curtains 102 placed at the entrance of the inspection tunnel 115 and, once inside, the presence of the object is detected by the relevant sensor 114.

At this time the system starts the self-calibration procedure for the detection chain.
First an offset calculation is done (it means the acquisition of the signal generated from the detection chain without x-rays, whose value will be subtracted from the signal acquired when the x-rays are on and the object is under examination).

Then the gain calculation is done (it means the acquisition of the signals generated from the detection chain with x-rays on but without object, whose values will be used to uniform the detector chain response).

Having completed the self-calibration procedure, the system is ready to start the examination of the object.

The object 110 passes across the x-ray fan beams generated by the x-ray sources 107 and 106 and its attenuation data are acquired by the detector chains 111 and 112, respectively under two different projection angles.

The use of two views from different projection angles results advantageous in order to identify homogeneous items inside the object under examination, also allowing an improved identification of the materials composition with respect to a single view configuration.

The problem of identifying the material that produces a given gray level image, that is a given spatial distribution of x-ray absorption, is a typical inverse problem in mathematical terms.

In particular the x-ray absorption in a given point is a measure of the integral of the absorption along the ray passing through the same point and through the source focus.

If we discretize in space the absorption coefficients, we come up with a linear system that cannot clearly be resolved with a reduced set of images, as multiple solutions are allowed.

In the present case it has to be identified if among the admissible solutions there are solutions (spatial distributions of absorption coefficients) that are compatible with the absorption characteristic of a target material, avoiding as possible false positives as well as false negatives.

To this aim, multiple energy images are of great help, as they allow localizing in the energy spectrum the absorption of the material distributed along each ray. Moreover, the different absorption of neighborhood pixels allows separating different objects. This spatial and spectral processing is advantageously utilized in the present invention to reduce the number of admissible solutions, without discarding solutions which are compatible with the target material.

Once the analysis is terminated, and there are no more objects inside the tunnel, the inspection system automatically turns the x-rays off.

Meanwhile the software algorithm for the identification of the target materials performs its analysis and, in case of positive identification, provides routing of the object, as soon as it passes the exit curtains 102, to a separate examination deck, by acting (if available) on an optional deviating device (diverter).

The visualization system provides on the screen of the operator console a bi-dimensional or tri-dimensional radiographic image, with appropriate spatial enhancement or marking of the identified target materials.

The operator has hence the possibility to perform on the screen typical treatments of the presented image, such as for example rotation, zooming and de-zooming, high-pass filtering, equalization, colorization, as well as swap between images at different energy levels.

The operator has also the possibility, in case it is deemed necessary, to repeat the x-ray scanning. To do this he just has to command the backwards movement of the conveyor belt; in facts the inspection system is able to perform the analysis with the belt moving in both forward and backward directions.

The data about the performed analyses can be stored, together with the associated images, for further analysis inside the system control unit and they can be sent by a variety of means (such as for example local area network, cabled or wireless lines, modem) to a remote archival system.

The same inspection system can be part of an automated control line, with the operator placed in a remote station.

In this case, the activation of the conveyor belt 103 does not occur by the command on the operator console, but by a control signal generated by an object sensor placed in proximity of the inspection system outside the tunnel 115.

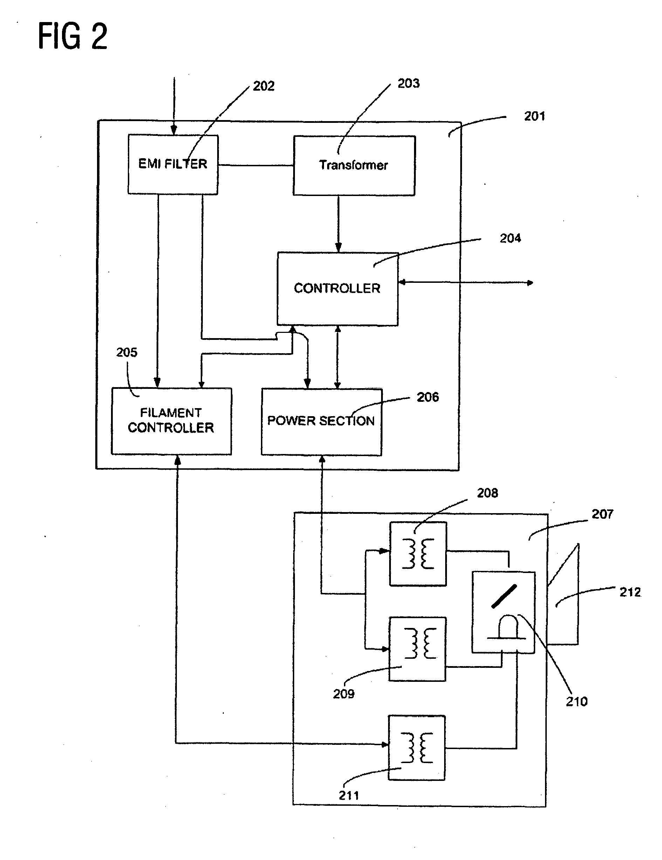

Referring to Figure 2, the block diagram of the electrical power and x-ray generator unit is here following described.

The x-ray source is composed by an x-ray tube 210, placed inside a tube head 207.
The generator 201 is controlled by a controller 204 and provides voltage and power to the tube head high tension transformer 208 and 209, converting to the necessary high voltage to produce x-rays of the desired useful hardness.

The generator 201 is electrically fed by the distribution system 108 and is filtered through an EMI filter 202. The current coming out of the EMI filter 202 is sent to a transformer / voltage converter 203, which generates the voltages necessary to make the generator function, to the power section 206 for the further distribution to the tube head 207, and to the filament controller 205 for the control of the filament of the x-ray tube 210.

The parameters used by both the power section 206 and the filament controller 205 are generated by the controller 204, which is in turn connected and controlled from the system control unit 105.

The tube head 207 can utilize two separate windings 208 and 209 converting the power received from the generator 206 respectively into anode and cathode voltages applied to the x-ray tube 210. The x-ray tube filament is also fed through a dedicated transformer 211.

The x-rays generated by the tube head 207 are shaped by a primary collimator 212, to form a thin beam having a length corresponding to the width of the inspection tunnel 115 and large enough to completely illuminate the detectors; for example its width can be about 1.5 mm.

The x-ray sources 106 and 107 are the same, having variable radiogenic parameters, according to the kind of object to be analyzed. They typically work at a steady tube voltage value (there are no variations in voltage, excluding the ripple of the source itself, during the analysis) and the same happens to the value of tube current. The values of voltage and current can vary between one inspection and another.

In the preferred embodiment of the present invention, the inspection system utilizes two x-ray sources, although use of more sources as well as of a single source is also possible.

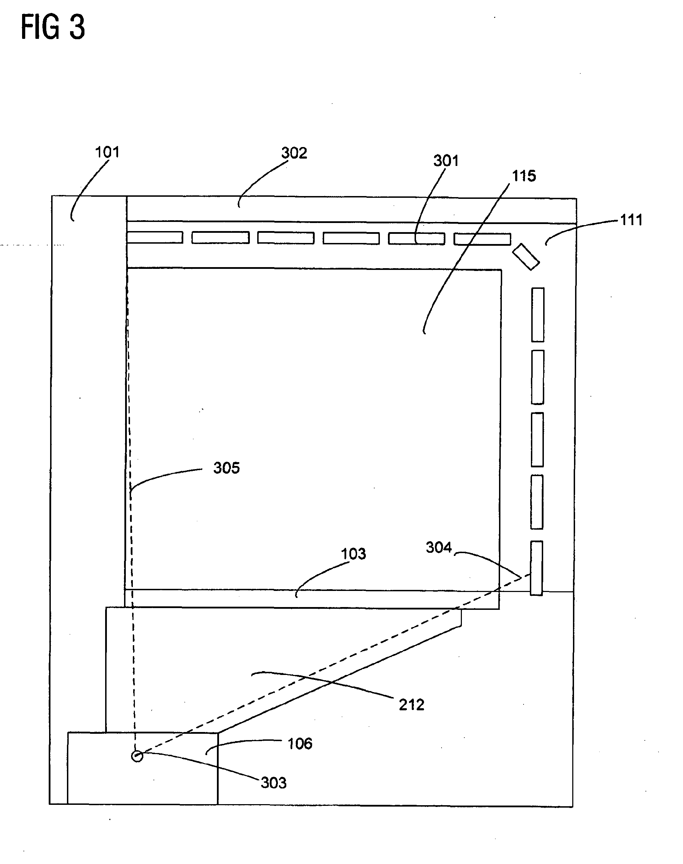

Referring to Figure 3, the block diagram of the first x-ray source and detector chain assembly is here following described.

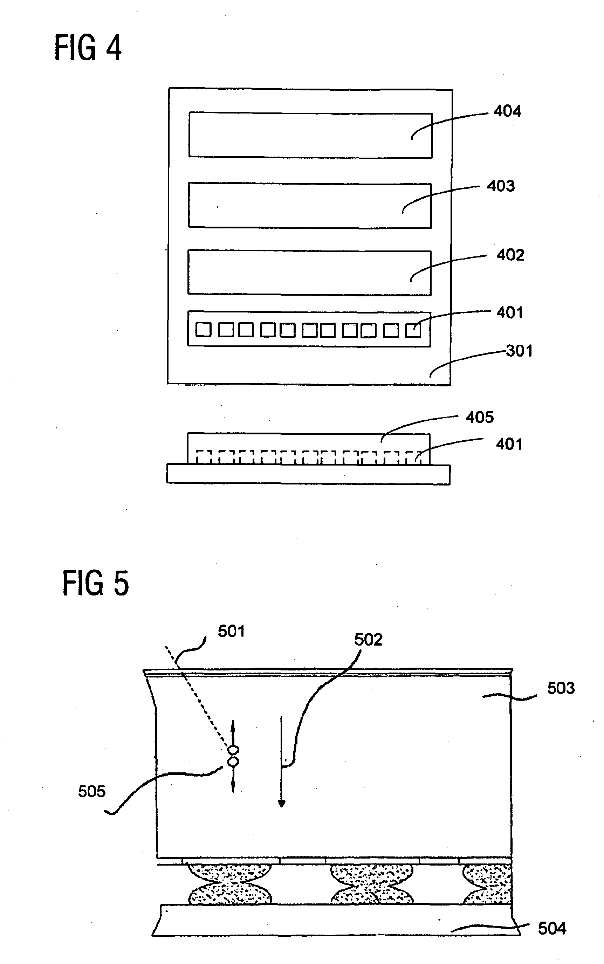

The detection chain 111 is composed of a variable number of detector modules 301, assembled on separate electronic boards. The detectors modules 301 are placed around the inspection tunnel, according to a L shape, forming one row on the upper side and one row on the rear side of the inspection tunnel 115, opposite to the x-ray source 303. The individual detector modules 301 are placed transverse to the x-ray beam. Preferably each detector board 301 has a different orientation, in order to optimize the angle versus the incident radiation and so maximize the collection of the x-rays attenuated by the inspected object and their conversion in electrical signals. The detector modules 301 hold individual detector pixels organized in a linear array (a row, as better shown in Figure 4). The number of used detector pixels is a function of the minimum voxel size of the object to be recognized during the inspection process (spatial resolution).

The electronics 302, devoted to control the detection chain, is placed as much as possible close to the detection chain, and it is shielded to minimize the noise effects caused by the scattered ionizing x rays. It provides collection of the data generated by each detector module 301, and data packet and transmission to the control system 105.

The x-ray source 106 is placed under the conveyor belt level, and it is on a side of the inspection system. Its orientation is such that the x-rays emitted from the focal spot 303 completely illuminate the inspection tunnel area, as shown by the cone boundaries 304 e 305 having as vertex the same focal spot 303 of the x-ray tube.

Referring to Figure 4, the block diagram that shows the composition of a typical detector board composing the detection chain is here following described.

As said, the detector chains are organized in detector modules 301, each of them having a variable number of detector pixels 401, usually arranged as a linear array of pixels, which is function of the spatial resolution needed to inspect the object. For example, a typical number of detectors housed in a single detector module can be 64.

The detector module 301 houses ancillary electronics 402 providing detector pixels bias and control, as well as signal conditioning such as output signal amplification and analog to digital conversion.

It also houses control electronics 403 having as main duty the cyclic scan of each detector pixel 401, in order to acquire and count the collected x-ray photons separated in energy bands, and interface electronics 404 dedicated to data packet and transmit, using a high speed link, to the detection chain control electronics 302.

In order to reduce the effects of the scattered radiation, the detectors 401 belonging to each module can be provided with a secondary collimator 405 of suitable size. This secondary collimator allows only the direct radiation to reach the detector pixels 401.

Referring to Figure 5, the block diagram related to the preferred x-ray detector configuration, to be used inside at least one of the detection chains of the inspection system, is here following described.

The x-ray detector is a solid state detector capable of making a direct conversion of the x-rays into an electrical signal. It is also able to provide the count of the photons collected according to their energy value; this type of x-ray detectors are preferably based on Cadmium Telluride (CdTe) or Cadmium Zinc Telluride (CZT).

In this type of detectors, when an x-ray photon 501 hits the detector substrate 503, an electron-hole couple 505 is generated, having an energy that is proportional to the energy of the incident photon.

The x-ray detector utilizes a bias voltage 502, creating an electric field capable of moving the generated electron charges towards the read-out electronics 504.

The x-ray detectors are mounted on the detector modules 301, typically arranged in linear configurations, as better shown in Figure 4.

The x-ray detectors and associated electronics have fast readout characteristics, allowing high speed detector readout frequency exceeding 100 MHz.

Thanks to their features of efficient energy conversion, reduced noise, fast response and photon energy discrimination, this type of x-ray detectors are ideal to achieve both the fast object reconstruction and the accurate identification of the materials composing the object under inspection.

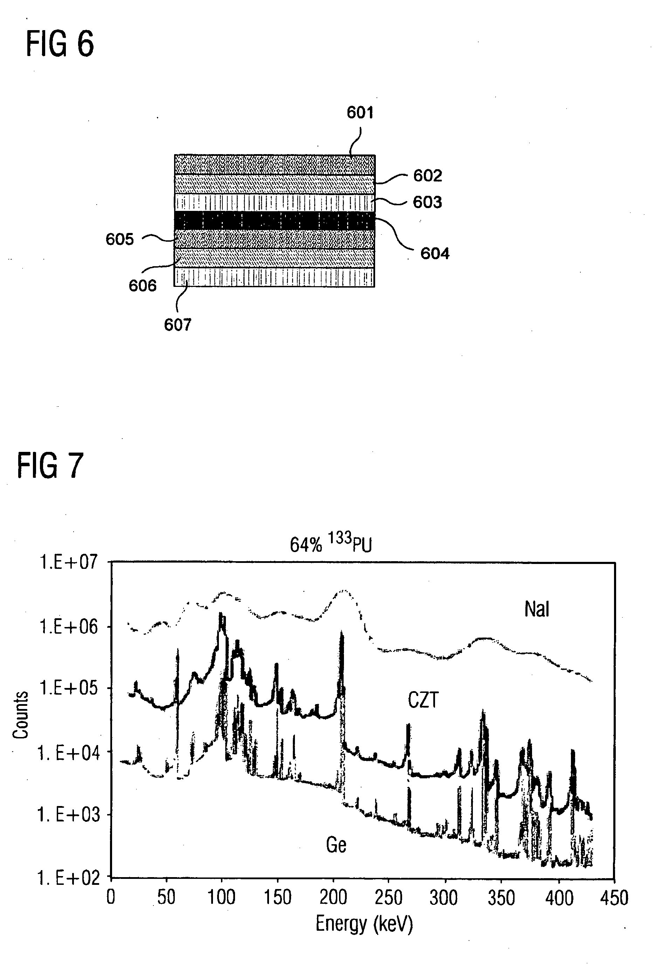

Referring to Figure 6, the block diagram that shows a second type of x-ray detector configuration, that can be used with or as an alternative to the previously described preferred x-ray detector configuration, is here following described.

The second type of x-ray detectors configuration is based on the coupling of a scintillator 601 with a photodiode 602 and related conditioning electronics 603.

The scintillator 601, when hit by an x-ray photon, generates a light photon at a fixed frequency typical of the used scintillator. The light photon is collected and converted into an electrical signal by the photodiode 602. The electrical signal generated by the photodiode is proportional to the amount of collected light photons, but it does not have any information about the energy of the original x-ray photons.

For this type of x-ray detector configuration, Cesium Iodide (CsI) or Sodium Iodide (NaI) scintillators can advantageously be used, eventually doped with specific elements to increase their response capability (typically Thallium (Tl)), Cadmium tungstate (CWO), Zinc selenide (ZnSe)).

To obtain the energy differentiation of the collected photons, a second detection chain composed by scintillator 605, photodiode 606 and the related conditioning electronics 607 is placed underneath, separated by a thin layer of absorbing material 604, namely a filter made of copper or any other material capable of modifying the x-ray spectrum, filtering the softer portion of the x-ray radiation spectrum emitted by the x-ray source.

Regarding the image reconstruction of the scanned object, the above described types of x-ray detectors are equivalent, while they are completely different regarding the material identification capability.

As matter of fact, in the case of the CdTe or CZT, the generated data carry the information needed to identify the materials, namely the photon counts associated with their energy level spectrum.

On the contrary, in the case of the scintillator based x-ray detectors, the generated data only carry information about the number of collected photons, but not about their energy.

Therefore as the application of the present invention requires the identification of the materials composition, it is a necessary feature of the preferred embodiment to have at least one detection chain based on x-ray detectors of the preferred configuration, providing information about the photon counts associated with the photon energy.

Other possible alternatives, such as those for example involving a change of the x-ray energy value by changing the tube voltage of the x-ray source, are not considered here, because of their limitations in relation with the speed of scanning and analysis, as they require a multiple object exposure.

Referring to Figure 7, the x-ray spectrum response of an object composed of 64% Pu is shown, as acquired by means of different x-ray detector materials such as Ge, CZT and NaI.

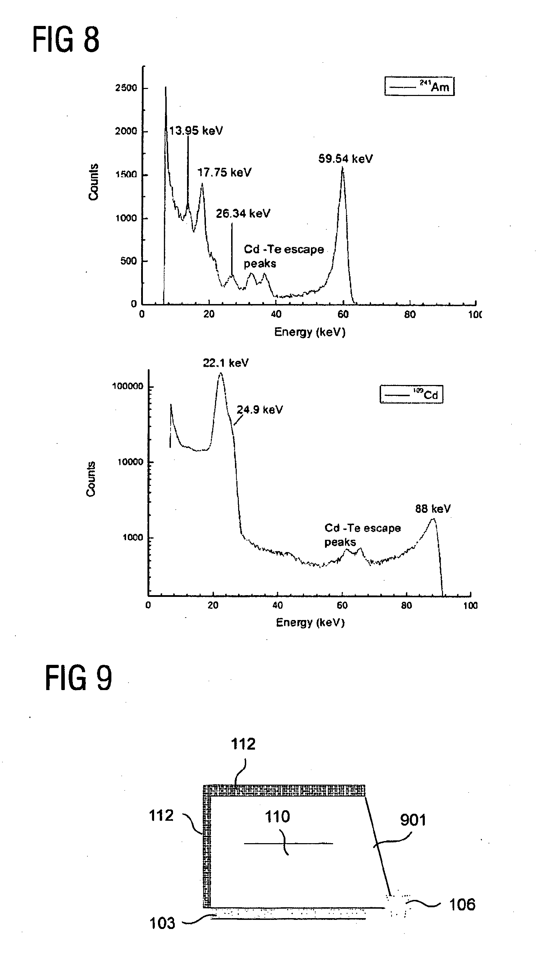

Referring to Figure 8, the x-ray spectrum response of objects composed of different materials is shown, as acquired by means of a CdTe based x-ray detector.

Referring to Figure 9, the details of a second detection chain is here following described. The components of the second detection chain 112 are the same of the first already described in Figure 3, namely the x-ray source 106 and the detection chain 112, but they are located on the other side of the tunnel with respect to the first one. The second x-ray source 106 is identical to the first, but it is mounted in a different way inside the inspection system. Preferably it is placed on one side of the inspection tunnel, at the same level of the conveyor belt 103. The second x-ray source is also equipped with a primary collimator 901.

In a preferred configuration of the inspection system, the two detection chains are both equipped with CdTe or CZT detectors; however in other alternative configurations, also aiming to limit the costs of the inspection system, one detection chain can be realized by a configuration with scintillator and photodiode detectors, as previously described.

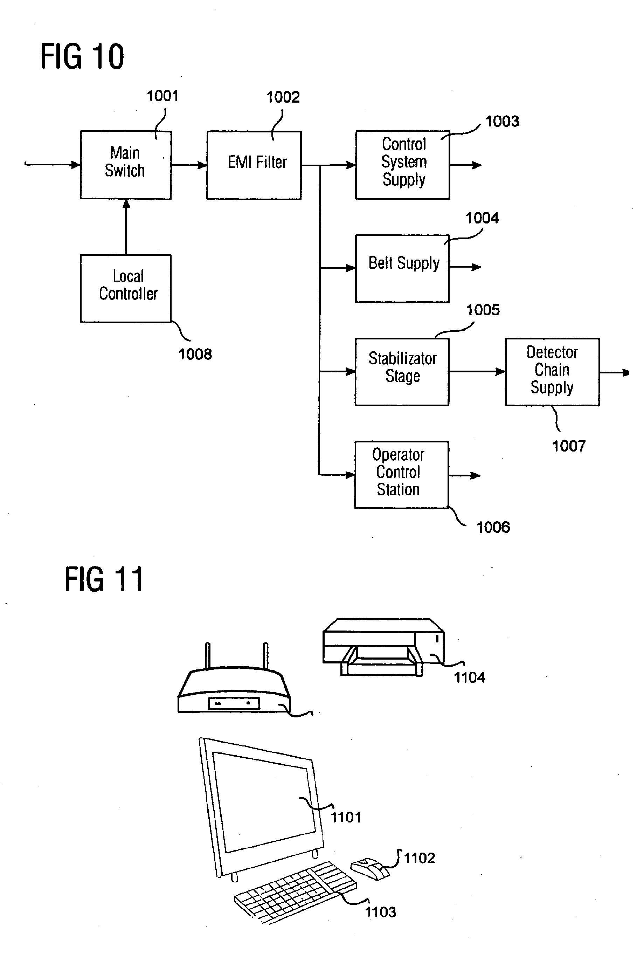

Referring to Figure 10, the block diagram of the power supply sub-system inside the inspection system is here following described.

This sub-system is devoted to convert the supply provided by the mains into the different voltages required by the various electronic modules. The power line enters into the inspection system via the mains switch 1001, that is controlled by a switch located on the control console, either local 1008 or remote.

After the mains switch, a mains filter 1002 is cascaded, providing interference suppression and isolation of the inspection system from the mains. After the mains filter, the power line is fed to the various electronics modules, each of them having a voltage converter on board, to adapt the mains voltage to their own needs.

The block 1003 provides the supply voltages for the control system.

The block 1004 provides the supply voltages to the power section for the conveyor belt motor drive.

The block 1006 provides the supply voltages for the operator console.

The block 1005 provides a stabilized power supply needed to feed the power lines of the detection chain 1007.

Referring to Figure 11, the components of the operator console of the inspection system are here following described.

The operator console is composed of a display 1101, over which the reconstructed images of the scanned object are presented, and of the operator commands necessary to control the inspection system operation, among which a keyboard 1102 and a mouse 1103 useful to impart commands by selecting icons shown on the display. The operator console can be equipped with one or two displays.

On the display the images of the analyzed object are shown in real time, reconstructed according to the attenuation data received from the acquisition chains 111 and 112. The reconstructed images presentation can occur in black and white, in which case the gray levels correspond to the measured attenuation levels, or it can occur in colors, in which case the false color scheme is used where the colors are chosen according to a specific palette related to the class of the identified materials.

The images shown on the display can be bi-dimensional or tri-dimensional, according to the number of detection chains available in the system, or to the operator choice. The images are corrected for the geometrical distortion caused by the x-ray source and detection chain geometry.

The keyboard 1102 is the means for the operator to control the inspection system, by sending the appropriate commands. On the keyboard at least the following commands are available: switch_on / switch_off, operator log_in / log_out, control movement of the conveyor belt, image post_processing, selection of the image shown at different energy levels, x-ray emission indicator.

The operator console of the inspection system can be complemented with printer 1104, allowing printout of the images shown on the screen, and with an optical archive 1105 allowing local storage and retrieval of selected images.

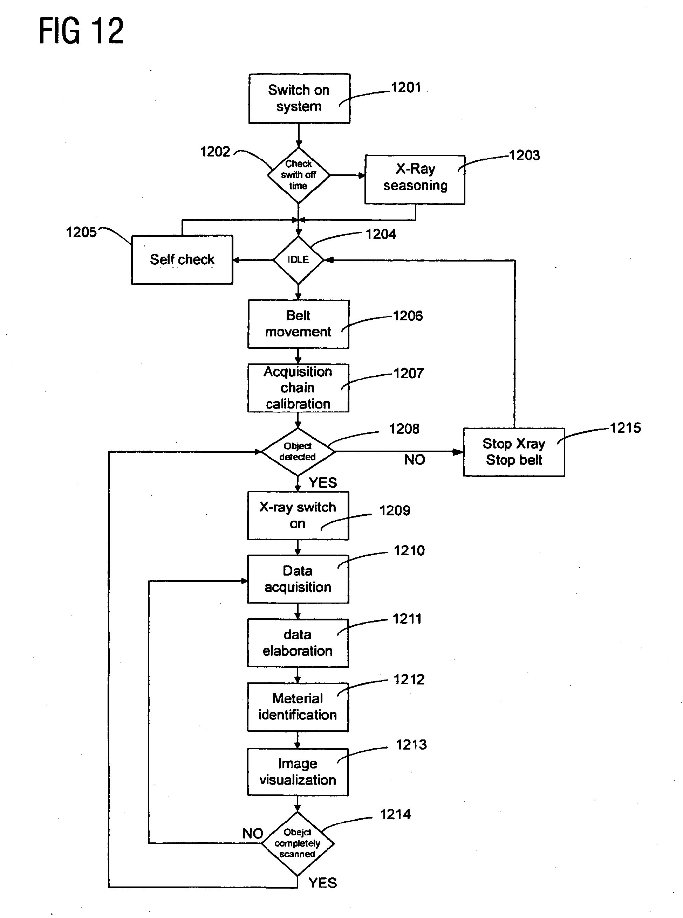

With reference to Figure 12, the principal operations of the inspection process are here following described.

The block 1201 represents the switch on stage, where the system is powered and initialized and a system login is given by an authorized operator. The block 1202 represents the stage where the length of the off time is checked. If the off time is exceeding a predefined limit, then the block 1203 performs the x-ray tube seasoning procedure, as required to ensure a normal operation (exempt from high tension flash over) and a prolonged life of the x-ray tube. Otherwise the system enters a wait loop 1204, waiting for belt movement start command from the operator. While the command is not given, the system executes the block 1205, performing self diagnostic testing to ensure the correct performance of the system components. When the operator command is given, the system enters the block 1206 where the conveyor belt movement is started.

In the next block 1207 the operations necessary to calibrate the acquisition chain are performed. For example those calibrations can involve a first phase without x-rays, where the individual detector offsets are automatically acquired for later subtraction from the measured data, and a second phase with x-rays, where the detectors are automatically illuminated without object and the individual gain data are automatically acquired for later compensation of the measured data. Also the x-ray source spectral data are acquired, to be utilized in the subsequent material identification elaborations. Of course the above described calibrations can also be performed periodically or alternatively at every system start up, eventually applying adequate parameters correction in dependence of environmental conditions.

In block 1208 the system waits for the first object being detected by the object detector 114. In case that an object is not detected within a certain timeout, block 1215 disables the x-rays and the conveyor belt movement and returns to idle state 1204.

When the object has been detected, block 1209 starts the x-ray generation illuminating the object and the detector chains.

In block 1210 the image data acquisition is performed, while the x-ray scanning of the object is progressing.

In block 1211 the image data elaboration is performed, finalized to reconstruction of the radiographic images.

For each available view the image sections reconstruction is made by tiling of the data provided by each detector module, corrected for the geometrical distortion introduced by the geometry of the x-ray source and detector chain. The complete radiographic images are then reconstructed by combination of the individual image sections.

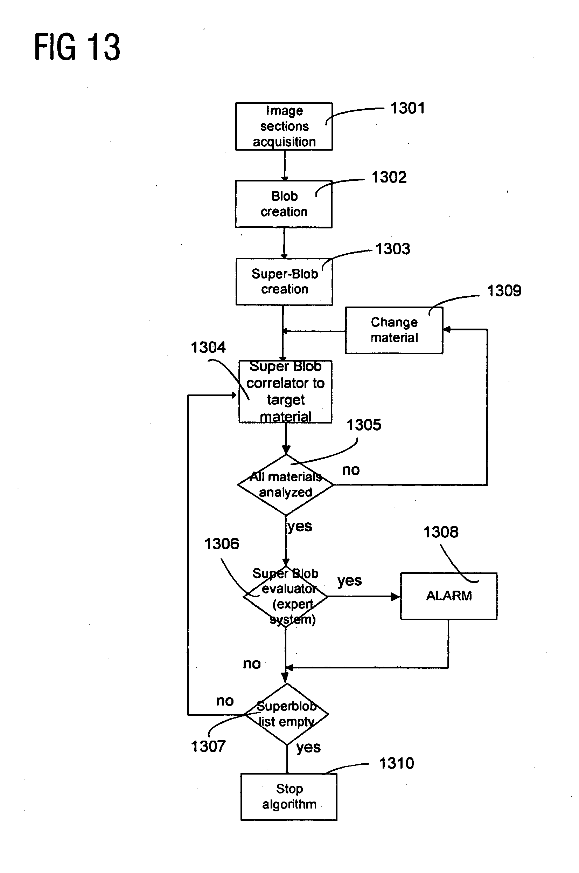

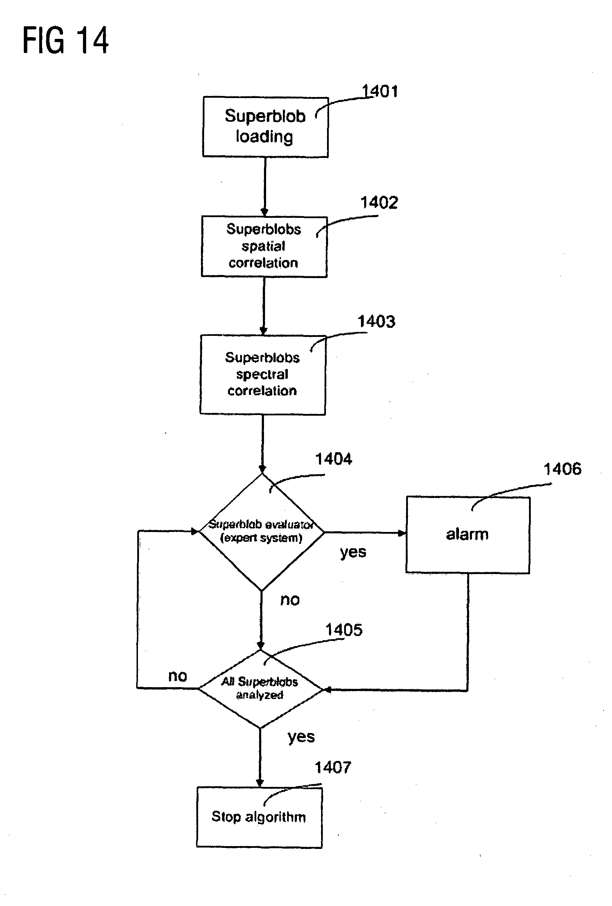

In block 1212 the material identification algorithms are applied on the image data, as illustrated in detail in the descriptions associated with Figures 13 and 14.

In block 1213 the reconstructed images are progressively visualized.

To display the reconstructed image, all the data generated at the different energy bands will be used, and the default image shown on the display 1101 is a combination of the images at different energies, providing the best contrast image. The default image displayed can be a 3D image of the scanned object, if more than two views are available in the inspection system, otherwise the 2D image of the object is shown.

Once the image is reconstructed, it is colored using the "false color" approach. The false color parameters to be used are usually defined by specific regulatory standards, depending on the application field of the inspection. For example the color used can be orange to identify the organic materials, green for inorganic materials, blue for metallic materials and yellow for objects that are too dense to have information about their classification.

Once the image is ready for the presentation to the operator, it is sent to the display. The presentation of the image on the display is made in real time, adding information as soon as they are received by the detection chain. Once the image is generated, a test is conducted to verify if the object shown is alarmed, according to the material identification algorithm described at Figures 13 and 14. If the object is marked as alarmed, it is highlighted using a red square around it. As long as objects are scanned while the conveyor belt is moving, the operator display is continually updated with new acquired data. Image freeze and post-processing analysis of the acquired data is possible when the conveyor belt movement is stopped. Among the typically used post-processing commands that are available to the operator is: Black and white (where the image is shown with grey levels associated to a color palette), Energy Stripping (where the operator can swap between images at the different energy bands), Rotate (where the operator rotates the image on screen by an arbitrary angle), Invert (where the operator inverts the color palette of the shown image), Zoom (where the operator enlarges an image portion according to a selectable magnification).

In block 1214 it is verified if the object scanning is completed. If not, the process repeats by returning to block 1210 for data acquisition. If yes, the process return to block 1208 verifying if another obj ect is detected. If no more objects are detected by the object detector 1214, then the x-rays are switched off and the conveyor belt movement is stopped, returning to the idle state at block 1204.

At any time the operator gives a belt stop command the belt movement is stopped, and the process interrupts returning to the idle state at block 1204.

The algorithm for the materials identification, which is part of the inspection system of the invention, is composed of two branches operating sequentially.

The first branch is described by the flow chart in Figure 13, and operates on the data acquired from each detection chain (each view) available in the system.

The second branch is described by the flow chart in Figure 14, and operates on the data elaborated by the first branch. It is only active when in the system there are two views or more.

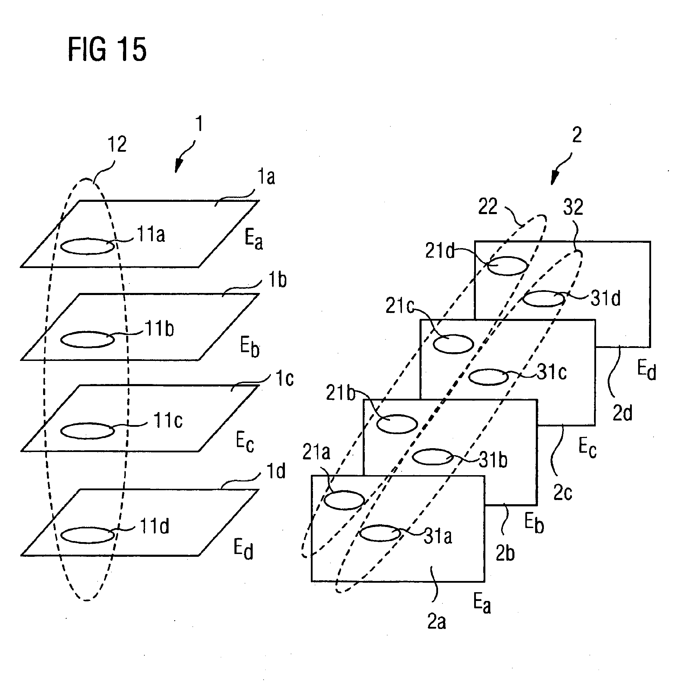

Figure 15 illustrates the concept of various clusters. In order to provide a better understanding of this concept and the type of processing based on this concept, Figure 15 is explained first.

Figure 15 shows four views 1, in particular views 1a, 1b, 1c, and 1d, which are associated with four different energy bands Eₐ, E_{b}, E_{c} and E_{d}. The views 1 can, for instance, be generated using the x-ray source 106 depicted in Figure 1 and Figure 3. The x-ray source 106 emits predominately in a vertical direction. Within these views 1a, 1b, 1c, and 1d exits respectively blobs 11 a, 11b, 11c and 11d which are homogenuos regions showing the same degree of attenuation. The areas of such blobs 11a, 11b, 11c and 11d are not necessarily exactly the same in extension and position. Corresponding blobs 11 in the views 1 form a super blob 12. The super blob 12 is associated with a specific spectral signature which is formed by the set of photon counts associated with the blobs 11 a, 11b, 11c, and 11d.

Figure 15 shows also a second series of four views 2, in particular views 2a, 2b, 2c, and 2d, which are also respectively associated with energy bands Eₐ, E_{b}, E_{c} and E_{d}. The views 2a, 2b, 2c, and 2d might be generated by using the x-ray source 107 from Figure 1 or by using the x-ray source 106 from Figure 9. The views 2 are generally taken from another point of view than the views 1, which is illustrated in Figure 15 by aligning the views 1 in a vertical direction and by arranging the views 2 in a horizontal direction. In practice, the spatial interrelation between the different views is generally more complex than depicted in Figure 15.

In the views 2 there are respectively blobs 21a, 21b, 21c, and 21d, which form a super blob 22, and also blobs 31a, 31b, 31c, and 31d, which form a super blob 32.

Figure 13 shows a flow chart of the first elaboration process branch, executed for each available view 1 or 2 while the object 110 is scanned.

The described algorithm provides the reconstruction of the radiographic image by means of linear sensors and x-ray fan beam scanning producing object attenuation image sections (actually image columns acquired sequentially in the time), but is also valid when the object attenuation data are acquired in other modalities, such as for example by x-ray collimated beam exposing large area detectors.

In the present invention the radiographic image is multi band, that means it is a collection of views 1 or 2, each associated to a defined energy band; the grey level of a pixel of the view 1 or 2 is therefore related to the projected object attenuation measured as total photon count of photons having energy within the defined energy band.

The image sections are transferred, at all the provided energy bands, as soon as they become available from the detection chain to the processor for elaboration.

The block 1301 identifies the computing unit that gathers the multi band image sections, as the basic data that progressively produce the reconstructed multi band radiographic images.

The block 1302 applies the algorithm for the identification and creation of the homogeneous material clusters (also named blobs). The algorithm analyzes the acquired sections as they are received, separately elaborating at the maximum resolution energy bands. The purpose is to create as an output macro areas or clusters (blobs 11,21, or 31) associated to objects with homogeneous attenuation characteristics within each energy band.

In the first image section associated to each band the pixels over a predefined threshold are considered, and the adjacent pixels showing a uniform grey level are grouped together in clusters (blobs 11, 21, 31). These clusters are associated to potentially different objects. The threshold level, differentiated for each energy band, is anyway part of the system calibration setting. The clusters constitute "seeds" of the objects, in other words groups of pixels from where to start for identifying the objects over the image.

Any subsequent section of the image at each energy band is elaborated to identify and join together with the already identified clusters the new pixels which are homogeneous by grey level.

In this phase new clusters can also be created, as well as terminate or spatially extend clusters that were already created in the previous sections.

In this way homogeneous clusters for each energy band are formed, characterized by their internal grey level distribution. Once the entire set of image sections is acquired and elaborated, the clusters can eventually further be fragmented in distinguished clusters/objects by using clustering algorithms applied on the entire cluster, such as for example competitive clustering (UCHIYAMA, T. and ARBIB, M.A: Color Image Segmentation Using Competititve Learnung, IEEE Transations on Pattern Analysis and Machine Intelligence, Vol. 16., No. 12, 1994, p. 1197-1206) and/or fuzzy clustering (HATHAWAY, R.J., BEZDEK, J.C., HU, Y.: Generalized Fuzzy c-Means Clustering Strategies Using Lp Norm Distances, IEEE Transactions on Fuzzy Systems, Vol. 8, No. 5, 2000, p. 576- 582), or alternatively, especially when the images are affected by high noise, by non linear filtering algorithms such as for example anisotropic diffusion (PERONA, P. and MALIK, J. : Scale-Space and Edge Detection Using Anisotropic Diffusion, Perona and Malik, IEEE Transations on Pattern Analysis and Machine Intelligence, Vol. 12., No. 7, 1990, p. 629-639).

This can be the case in situations, in which two different objects made of homogeneous material with small difference in their absorption in a given energy band are juxtaposed along the scanning direction. In this case, the difference in the gray levels between the last section containing the first object and the first section containing the second one, can be too small to detect a new object and the system, in a first phase, creates a single blob containing both objects. In this situation, an a-posteriori clustering of this large blob can reveal the presence of two homogenous regions and therefore separate the two objects for further processing.

The cluster extension can also be determined by analyzing the pixels homogeneity by means of statistical boundary test (t test), or by statistical classification models, such as mixture models (BISHOP, C. M.: Pattern Recognition and Machine Learning, Springer 2006), that produce the fitting to the grey level of linear combinations of adequate functions.

When after receiving a new section no more pixels are added to a cluster, that cluster is closed on the image of that particular energy band.

It is then added to the clusters (blob) list and it is ready to be analyzed. Of course the process of block 1302 can also concurrently occur during the data acquisition process of block 1301, with optimization of the computation time.

Therefore the output of the block 1302 is a collection of clusters or blobs, each associated to a specific energy band. These blobs are further elaborated in the subsequent steps.

The block 1303 represents the phase where the previously identified blobs are grouped together, to create the so called Super-blob. The super-blob provides the spectral characteristic, over the entire x-ray spectrum, of the spatial region where it is located.

For example, given a certain spatial region corresponding to a blob in all the energy bands, the super-blob will result as the collection of all the pixels in the different energy bands belonging to that spatial region.

The block 1304 represents the phase where the previously identified super-blobs are compared with a library of known target materials.

The comparison consists of verifying if an intersection exists between the spectral signature (histogram) of each super-blob and that of the current target material, extended over a set of macro bands covering the entire x-ray energy spectrum. The analysis preferably utilizes a predefined dynamic re-configuration of the energy bands tailored to the specific target material, for example by grouping together adjacent energy bands and creating the histogram of the average pixel attenuations at the different energy bands.

The correspondence criterion is based on a tolerance range with predefined thresholds. Such thresholds are variable, depending on the target material and the system configuration. The tolerance range is larger (corresponding to acceptance of a greater number of false positives, as they will later be resolved thanks to the elaboration of the data produced by multiple views) when the inspection system is configured as multi view, while the tolerance range is narrower (corresponding to a lower acceptance of false positives), when the inspection system is configured as single view.

If the intersection is null, the output of block 1304 is "test negative", that means there is no correspondence of the super-blob with that target material.

If the intersection is not null, the output of block 1304 is "test positive", that means there is a correspondence with that target material. In such case the super-blob is associated to the relevant target material with an index of confidence such as for example the absolute or relative deviation from the expected average attenuation.

Then the control goes to block 1305 verifying if all the foreseen target materials have been analyzed.

If the list of target materials to be evaluated is not empty, then the block 1309 provides changeover to the next target material, and returns control to block 1304 where the test is repeated.

When the list of target materials to be evaluated is empty, which means that all the target materials have been analyzed, then the control goes to block 1306 where the correlation analysis data are evaluated by an expert system.

The expert system evaluator reviews the super-blobs associations to target materials and their indexes of confidence, as well as the spatial and spectral data of the same super-blob, eventually analyzing super-blobs which are contiguous or overlap with the current super-blob, and applying appropriate corrections on the number and shape of the same super-blobs, in order to achieve a spectrum match with the target material. It hence means that the expert system can modify the list of valid super-blobs.

Also the review can involve adjustment /narrowing of the thresholds on attenuation values in order to provide a better spectral match and reduce the instances of false positives. Also the review can involve the re-arrangement of the energy band configurations used for the correlation to the target material, in order to obtain a better spectral match also in relation to the actual material thicknesses.

Moreover the review can involve application of weighting criteria on the indexes of correlation at the energy bands associated to the specific target material, and also pattern recognition based on particular feature characteristics of the patterns either spatial (for example planar or spherical structures) or spectral.

The expert system therefore derives for each valid super-blob a 'positive' or 'negative' test confirmation.

If the output of block 1306 is 'positive' then block 1308 marks the super-blob with an alarm code associated with the specific target material.

If the output of block 1306 is 'negative' (or at the end of the alarming block 1309), the control goes to block 1307 verifying if the list of super-blobs to be analyzed is empty.

If the list is not empty, it returns to block 1304 to repeat the test with another super-blob. Otherwise, if the list is empty, the algorithm terminates at block 1310.

The algorithm described in Figure 13 shall be repeated for each available view.

Therefore the output of the algorithm is a list of alarmed super-blobs, each associated with its spectral and spatial characteristics, for each view available in the inspection system. Of course the processes of block 1304 and 1306 can also concurrently occur with the process of super-blob creation of block 1303 to reduce the computation time.

With reference to Figure 14, the flow chart about the second elaboration process branch, occurring only when two or more views are available in the inspections system, is here following illustrated.

This elaboration branch receives in block 1401 from the previous branch described in Figure 13 the information associated with the identified super-blobs: spatial position and extension, as well as the spectral attenuation data and the alarm status.

In block 1402 the algorithm looks for a spatial relation between the super-blobs available in different views.

The algorithm proceeds, for each super-blob belonging to the first view, by identifying in the second view those super-blobs that produce a projection cone that intersects with the projection cone produced by the first super-blob, and then establishing a spatial relationship between super-blobs of the two views.

By intersection of the projection cones associated with all the related super-blobs, a first approximate 3D position and volume of the objects under examination can be derived.

Naturally, in the case that one super-blob in the first view is spatially related with more super-blobs in the second view, it can also be derived the information that more objects are overlapped and the spectral data of the super-blob in the first view is likely to be affected by the spectral data of all the objects combined together.

The block 1402 therefore exits with an output list of all the spatially related super-blobs belonging to different views.

The block 1403 performs the spectral analysis of super-blobs spatially correlated in the two views, to verify the correlation between the spectral data of the same two super-blobs. The analysis is carried out by analyzing the spectral data of each super-blob in a first view and of the spatially correlated super-blobs in the other views. These can be one or more than one. The analysis is first done in pairs. For example, referring to Figure 15, in the case of a single super-blob 12 in a first view 1 spatially related with two super-blobs 22 and 32 in a second view, it can mean that the analysis will first be performed on the pair 12 and 22, and then on the pair 12 and 32.

In case that the analysis in pairs does not provide a correlation, the analysis can also be extended to any multiple combinations of super-blobs spectral data.

In the example above the spectral data of super-blob 12 can be compared with the combined spectral data of super-blobs 22 and 32.

During the analysis the spectral histogram profile of the super-blob in the first view can be compared with that of the super-blob in the second view, preferably at the maximum resolution of the energy bands. This analysis can be carried out through standard techniques of correlation of the spectral histogram at all the foreseen energy bands. such as "block matching" (GONZALES, R. C., WOODS, R. E. Digital Image Processing, Third Edition, Pearson Education, 2008).

Alternatively, this analysis can also be carried out through "statistical matching" (BISHOP, C. M.: Pattern Recognition and Machine Learning, Springer, 2006). In such case the spectral signature (histogram) of the super-blobs under analysis shall be defined in statistical terms, as for example by defining an a-priori probability of the absorption coefficients value for the different energy bands.

If the super-blobs spectra data are compatible, then the super-blobs are spectrally correlated, otherwise they are not spectrally correlated.

If the spectral correlation is found then the output of block 1403 is "correlation test positive", that means there is a correspondence between the spectral signatures of the super-blobs in the two views, and an index of confidence is associated to such correlation. The block 1403 therefore exits with an output list of all the super-blobs belonging to different views which are both spatially and spectrally correlated and those which are spatially correlated but not spectrally correlated.

Then the control is given to block 1404, super-blob evaluator, where the analysis is performed to confirm if a super-blob is associated with a specific target material. Particularly in security controls an alarm can be generated if the blob results associated with a specific dangerous substance, such as for example those needed to create Improvised Explosive Components (IED).

This analysis is carried out by a hybrid intelligent system that combines inferences typical of an expert system based on propositional analysis and statistical matching.

The expert system evaluator reviews the data about the correlated and not correlated super-blobs available from the multiple views, that means the individual super-blob spatial and spectral data, the individual super-blob indexes of correlation to target materials, and the reciprocal indexes of correlation between super-blobs of multiple views, and derives a 'positive' or 'negative' evaluation based on first order logical clauses which are inserted "a priori", and also on adaptive logical clauses which are derived from experience with a self-learning approach and/or from further elaboration of super-blob spatial and spectral data. For example a logical clause can be "if super-blobs 12 and 22 are both spatially and spectrally correlated and not associated to a dangerous material, then they are not considered as dangerous".

Another logical clause can be "if super-blobs 12 and 22 are both spatially and spectrally correlated and are both associated to a dangerous material, then they are considered as dangerous".

Another logical clause can be "if super-blobs 12 and 22 are spatially correlated but not spectrally correlated and 21 is associated to a dangerous target material, then 12 is reviewed for correlation to the same target material.

The review can involve geometric and/or volume corrections, eventually fragmenting into more super-blobs, in order to achieve a spectrum match with the target material".

Also the review can involve adjustment /narrowing of the thresholds on attenuation values in order to provide a better spectral match and reduce the instances of false positives. Also the review can involve the re-arrangement of the energy band configurations used for the correlation to the target material, in order to obtain a better spectral match also in relation to the actual material thicknesses.

Also the review can involve applying weighting criteria on the indexes of correlation at the energy bands associated to the specific target material.

Therefore block 1404 produces as an output 'evaluation test positive' in the case that the super-blob under evaluation is confirmed as positively correlated to a target material.

If the evaluation test of block 1404 is positive, then block 1406 sets an alarm associated to the super-blob under evaluation for the specific target material.

If the evaluation test of block 1404 is negative, or after block 1406, then the control is transferred to block 1405, where it is verified if the list of super-blobs to be examined is empty.

If the list is not empty, the algorithm takes the next super-blob to be analyzed and returns to block 1404.

If the list is empty, the algorithm ends at block 1407.

Thanks to the method of the invention it is therefore possible to accurately and timely identify any spatial and spectral correlations between super-blobs identified in multiple views and their respective correlation with known target materials, with a minimum amount of false positives and false negatives.

The efficiency and flexibility of the algorithm ensures a short computation time and the capability of withstanding a speed of the conveyor belt in excess of 0.5 m per second.

Among the ancillary features of the inspection system of the invention is the possibility to be advantageously arranged in a mobile configuration, facilitating the transport on wheels in different locations inside a building, with ease of installation and calibration.

It can also be easily arranged for installation on a mobile station, such as a truck or a container, facilitating the use in various temporary situations and events such as stadiums, or stations, meeting halls, or any other place of people aggregation.

Particularly in the field of security inspections, it is also foreseen that multiple inspection systems communicate each other allowing gathering of multiple information and detection of the separated precursor components necessary for the contraband fabrication of an Improvised Explosive Device.

The inspection system can also be arranged in the dimensions and sizes necessary for industrial controls, such as for example production lines for the food or pharmaceutical industry, or any other manufacturing application where the timely identification of the product material composition is of importance.

A further advantage of the inspection system is to supply a solution for the security and line inspections characterized by an accurate and error free determination of the chemical composition of the substances under examination, whether solid or liquid. For example in the field of security inspections the present invention provides a true determination well beyond the prior art level, currently ranging up to 90%, and a false determination well below the prior art level, currently ranging over 5%.

Another advantage of the inspection system is that the determination of the chemical composition and the identification of specific target substances occur in a timely manner, typically compatible with a conveyor belt speed at least up to 0.5 m per second.

The inspection system also provides a significant aid to the operator, thanks to the extended automation in the configuration and calibration of the system as well as in the identification and location of the target materials, and their visualization and marking to the same operator.

Finally it should be noted that throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

## Claims

1. A method for performing a non invasive x-ray inspection of objects, comprising the method steps of:
- providing at least one x-ray source (106, 107, 210) emitting a polychromatic x-ray beam incident on the object under inspection;
- providing at least one x-ray detector (301) composed by detector elements (401) located side by side and capable of intercepting the radiation modified by the object (110) under inspection and producing, for each detector element (401), attenuation data associated to at least two energy bands;
- providing a computation unit (113) for performing an elaboration process on the attenuation data acquired from the at least one detector (301) and for reconstructing radiographic images (1, 2) of the objects (110) under inspection as well as information about their volume and composition, wherein
- for each detector element (401), the attenuation data are available in the form of radiation intensities associated to one energy band within a range of at least four energy bands of the x-ray spectrum of the x-ray beam and constituting the spectral signature of the attenuation data generated by the detector element (401), and wherein
- the elaboration process includes the steps of identification of homogeneous material clusters (11,21,31) of the object (110), and of comparison by an expert system between such spectral signature of said clusters (11, 21, 31) and the spectral signature of at least one target material,
**characterized in that**
a first elaboration process is applied on the attenuation data, performing:
a) clustering (1302) of homogeneous spatial areas, named blobs (11, 21, 31) within each energy band image (1, 2);
b) aggregation (1303) of more blobs (11, 21, 31) belonging to corresponding spatial regions at different energy bands into super-blobs (12, 22, 32) providing the complete spectral signature of that spatial region;
c) evaluation (1306) by an expert system of the correspondence between the spectral signature of the super-blob (12, 22, 32) and that of a predefined liquid or solid or gaseous target material.

2. The method according to Claim 1,
wherein the attenuation data are available in the form of photon counts each associated to one energy band within a range of at least four energy bands of the x-ray spectrum of the x-ray beam and constituting the spectral signature of the attenuation data generated by the detector element (401).

3. The method according to Claim 1 or 2,
wherein the at least four energy bands are dynamically modified during the elaboration process in order to increase the reliability of the matching between the measured spectral signature of the object (110) under inspection and the spectral signature of the predefined target material.

4. The method according to any one of Claims 1 to 3,
wherein the polychromatic x-ray beam is collimated by means of a primary collimator (212) located between the x-ray source (106, 107, 210) and the object (110) and directing the x-ray beam to the object (110) according to a predefined angle.

5. The method according to any one of Claims 1 to 4,
wherein the detector (301) comprises at least one x-ray detector chain (111), composed by detector elements (401) organized according to at least one linear array.

6. The method according to Claim 5,
wherein the inspection system is provided with two or more detector chains (111, 112) illuminated by two or more x-ray sources (106, 107, 210) and the acquired data are elaborated in order to generate bi-dimensional and tri-dimensional radiographic images reconstructed for multiple energy bands.

7. The method according to Claim 6,
wherein a second elaboration process is applied in case that more than one detector chain (111, 112) are available in the inspection system, performing:
a) spatial correlation (1402) between the super-blobs (12, 22, 32) identified from different detector chains (111, 112);
b) spectral correlation (1403) between super-blobs (12, 22, 32) identified from different detector chains (111, 112);
c) review (1404) by an expert system of the correspondence between the spectral signature of the super-blob (12, 22, 32) and that of a predefined liquid or solid or gaseous target material based on the information derived from the more than one detector chains (111, 112).

8. The method according to any one of Claims 1 to 7,
wherein the expert system, by means of propositional rules introducing soft and hard constraints on the allowed solutions and statistical elaborations on the attenuation data, makes a robust classification in respect to the correspondence of the spectral signature of the super-blob (12, 22, 32) and that of a predefined liquid or solid or gaseous target material.

9. The method according to any one of Claims 1 to 8,
wherein the at least one detector chain (111, 112) is composed of individual direct type x-ray detectors belonging to the families of CdTe or CdZnTe, or Si, or any other material with similar photon capture with energy discrimination performances, and is equipped with a secondary collimator (405) performing shielding of the scattered radiation.

10. The method according to any one of Claims 1 to 9,
wherein the object (110) under inspection and the x-ray detector (301) are moved relative to each other while the x-ray source (106, 107, 210) emits radiation.

11. The method according to any one of Claims 1 to 10,
wherein the sampling rate of the detector chain photon counts is implemented at adequate frequency to support conveyor belt movement with speed in excess of 0.5 m per second.

12. The method according to any one of Claims 1 to 11,
wherein the inspection system is installed on a permanent location, or is movable on wheels, or is transportable with a mobile truck station, or is adapted to an industrial production line.

13. The method according to any one of Claims 1 to 12,
wherein the inspection system is utilized in applications involving security inspections in aviation, military and civil buildings and aggregation areas, and industrial inspections among which in the food and pharmaceutical industry.

14. An apparatus for performing a non invasive x-ray inspection of objects, comprising:
- at least one x-ray source (106, 107, 303) emitting a polychromatic x-ray beam incident on the object (110) under inspection;
- at least one x-ray detector (301) composed by detector elements (401) located side by side and capable of intercepting the radiation modified by the object (110) under inspection and producing, for each detector element (401), attenuation data associated to at least two energy bands ;
- a computation unit (113) for performing an elaboration process on the attenuation data acquired from the at least one detector and for reconstructing radiographic images of the objects under inspection as well as information about their volume and composition,
**characterized in that**
the apparatus is arranged for performing a method according to any one of Claims 1 to 13.

## Patentansprüche

1. Verfahren zum Ausführen einer zerstörungsfreien Röntgenuntersuchung von Gegenständen mit den Verfahrensschritten:
- Bereitstellen von wenigstens einer Röntgenquelle (106, 107, 210), die einen auf das zu untersuchende Objekt einfallenden polychromatischen Strahl emittiert;
- Bereitstellen von wenigstens einem Röntgendetektor (301), der von nebeneinander angeordneten Detektorelementen (401) gebildet ist und der dazu in der Lage ist, die von dem zu untersuchenden Objekt (110) modifizierte Strahlung zu empfangen und für jedes Detektorelement (401) wenigstens zwei Energiebändern zugeordnete Schwächungsdaten zu erzeugen;
- Bereitstellen einer Recheneinheit (113), um einen Verarbeitungsvorgang mit den Schwächungsdaten auszuführen, die von dem wenigstens einen Detektor (301) erhalten worden sind, und um radiographische Bilder (1, 2) der zu untersuchenden Objekte (110) und Informationen über deren Volumen und Zusammensetzung zu rekonstruieren, wobei
- für jedes Detektorelement (401) die Schwächungsdaten in der Gestalt von Strahlungsintensitäten vorliegen, die jeweils einem Energieband aus einer Menge von wenigstens vier Energiebändern des Röntgenspektrums des Röntgenstrahls zugeordnet sind und die spektrale Signatur der von dem Detektorelement (401) erzeugten Schwächungsdaten sind, und wobei
- der Verarbeitungsvorgang die Schritte der Identifikation von homogenen Materialclustern (11, 21, 31) des Objekts (110) und einen Vergleich durch ein Expertensystem zwischen einer derartigen spektralen Signatur der Cluster (11, 21, 31) und der spektralen Signatur von wenigstens einem Zielmaterial umfasst,
**dadurch gekennzeichnet, dass** ein erster Verarbeitungsvorgang auf die Schwächungsdaten ausgeführt wird, bei dem:
a) homogene Raumbereiche, genannt Einheiten (11, 21, 31) innerhalb jedes Energiebandbildes (1, 2) geclustert (1302) werden;
b) mehrere Einheiten (11, 21, 31), die zu entsprechenden Raumbereichen in verschiedenen Energiebändern gehören, zu Supereinheiten (12, 22, 32) aggregiert (1303) werden, die die vollständige Signatur des Raumbereichs bilden;
c) durch ein Expertensystem eine Bewertung (1306) der Übereinstimmung zwischen der spektralen Signatur der Supereinheit (12, 22, 32) und von derjenigen eines vorbestimmten flüssigen oder festen oder gasförmigen Zielmaterials durchgeführt wird.

2. Verfahren nach Anspruch 1,
bei dem die Schwächungsdaten in der Gestalt von Photonenzählerständen vorliegen, die jeweils einem Energieband innerhalb einer Menge von wenigstens vier Energiebändern des Röntgenspektrums des Röntgenstrahls zugeordnet sind und die spektrale Signatur der vom Detektorelement (401) erzeugten Schwächungsdaten darstellen.

3. Verfahren nach Anspruch 1 oder 2,
bei dem die wenigstens vier Energiebänder dynamisch während des Verarbeitungsvorgangs angepasst werden, um die Verlässlichkeit der Suche nach Übereinstimmung zwischen der gemessenen spektralen Signatur des zu untersuchenden Gegenstandes (110) und der spektralen Signatur des vorbestimmten Zielmaterials zu erhöhen.

4. Verfahren nach einem der Ansprüche 1 bis 3,
bei dem der polychromatische Röntgenstrahl mittels eines primären Kollimators (212) kollimiert wird, der zwischen der Röntgenquelle (106, 107, 210) und dem Gegenstand (110) angeordnet ist und der den Röntgenstrahl auf das Objekt (110) unter einem vorbestimmten Winkel richtet.

5. Verfahren nach einem der Ansprüche 1 bis 4,
bei dem der Detektor (301) wenigstens eine Röntgendetektorkette (111) aufweist, die aus Detektorelementen (401) zusammengesetzt ist, die in wenigstens einer linearen Anordnung organisiert sind.

6. Verfahren nach Anspruch 5,
bei dem das Untersuchungssystem mit wenigstens zwei oder mehr Detektorketten (111, 112) versehen ist, die von zwei oder mehreren Röntgenquellen (106, 107, 210) beleuchtet sind, und bei dem die aufgenommenen Daten verarbeitet werden, um zweidimensionale und dreidimensionale radiographische Bilder zu erzeugen, die für die mehrfachen Energiebänder rekonstruiert worden sind.

7. Verfahren nach Anspruch 6,
wobei ein zweiter Verarbeitungsvorgang für den Fall ausgeführt wird, dass mehr als eine Detektorkette (111, 112) in dem Untersuchungssystem verfügbar ist, bei dem:
a) die Supereinheiten (12, 22, 32), die von den verschiedenen Detektorketten (111, 112) identifiziert worden sind, räumlich korreliert (1402) werden;
b) die Supereinheiten (12, 22, 32), die von verschiedenen Detektorketten (111, 112) identifiziert worden sind, spektral korreliert (1403) werden,
c) die Übereinstimmung zwischen der spektralen Signatur der Supereinheit (12, 22, 32) und derjenigen eines vorbestimmten flüssigen oder festen oder gasförmigen Zielmaterials von einem Expertensystem auf der Grundlage von Informationen überprüft (1404) wird, die von der mehr als einen Detektorkette (111, 112) erhalten worden sind.

8. Verfahren nach einem der Ansprüche 1 bis 7,
bei dem das Expertensystem mittels Aussageregeln, die weiche und harte Zwangsbedingungen für die zulässigen Lösungen und statistische Verarbeitung der Schwächungsdaten einführen, eine robuste Klassifizierung bezüglich der Übereinstimmung der spektralen Signatur der Supereinheit (12, 22, 32) und derjenigen eines vorbestimmten, flüssigen, festen oder gasförmigen Zielmaterials erstellt.

9. Verfahren nach einem der Ansprüche 1 bis 8,
bei dem die wenigstens eine Detektorkette (111, 112) aus individuellen Röntgendetektoren vom direkten Typ zusammengesetzt ist, die zu der Familie CdTe oder CdZnTe oder Si oder jedem anderen Material mit einer ähnlichen Photonen-detektion mit Energieauflösung gehören, und mit einem sekundären Kollimator (405) ausgestattet ist, der eine Abschirmung gegen Streustrahlung bewirkt.

10. Verfahren nach einem der Ansprüche 1 bis 9,
bei dem das zu untersuchende Objekt (110) und der Röntgendetektor (301) untereinander eine Relativbewegung ausführen, während die Röntgenquelle (106, 107, 210) Strahlung emittiert.

11. Verfahren nach einem der Ansprüche 1 bis 10,
bei dem die Abtastrate der Photonenzählstände der Detektorkette in einer ausreichenden Frequenz implementiert ist, um eine Förderbandbewegung mit einer Geschwindigkeit oberhalb von 0,5 m pro Sekunde zu unterstützen.

12. Verfahren nach einem der Ansprüche 1 bis 11,
bei dem das Untersuchungssystem stationär installiert ist oder auf Rädern beweglich ist oder mit Hilfe einer mobilen Lastwagenstation transportierbar ist oder an eine industrielle Produktionslinie angepasst ist.

13. Verfahren nach einem der Ansprüche 1 bis 12,
bei dem das Untersuchungssystem in Anwendungen verwendet wird, die eine Sicherheitsuntersuchung in der Luftfahrt, in militärischen und zivilen Gebäuden und Verdichtungsbereichen, und industrielle Untersuchungen, unter anderem in der Ernährungs- und pharmazeutischen Industrie verwendet wird.

14. Vorrichtung zum Ausführen einer zerstörungsfreien Untersuchung von Objekten mit:
- wenigstens einer Röntgenquelle (106, 107, 303), die einen auf ein zu untersuchendes Objekt (110) einfallenden polychromatischen Röntgenstrahl emittiert;
- wenigstens einem Röntgendetektor (301), der von nebeneinander angeordneten Detektorelementen (401) gebildet ist und der in der Lage ist, vom zu untersuchenden Objekt (110) modifizierte Strahlung aufzunehmen und für jedes Detektorelement (401) wenigstens zwei Energiebändern zugeordnete Schwächungsdaten zu erzeugen;
- einer Recheneinheit (113), um einen Verarbeitungsvorgang für die Schwächungsdaten durchzuführen, die von dem wenigstens einen Detektor erhalten worden sind, um radiografische Bilder der zu untersuchenden Objekte und Informationen über deren Volumen und Zusammensetzung zu rekonstruieren,
**dadurch gekennzeichnet, dass** die Vorrichtung dazu eingerichtet ist, ein Verfahren nach einem der Ansprüche 1 bis 13 auszuführen.

## Revendications

1. Procédé pour effectuer une inspection aux rayons X non invasive d'objets, comprenant les étapes de procédé de :
- fourniture d'au moins une source de rayons X (106, 107, 210) émettant un faisceau de rayons X polychromatique incident sur l'objet soumis à inspection ;
- fourniture d'au moins un détecteur de rayons X (301) composé d'éléments détecteurs (401) situés côte à côte et capable d'intercepter le rayonnement modifié par l'objet (110) soumis à inspection et produisant, pour chaque élément détecteur (401), des données d'atténuation associées à au moins deux bandes d'énergie ;
- fourniture d'une unité de calcul (113) pour exécuter un processus d'élaboration sur les données d'atténuation acquises depuis l'au moins un détecteur (301) et pour reconstruire des images radiographiques (1, 2) des objets (110) soumis à inspection ainsi que des informations sur leurs volume et composition, où
- pour chaque élément détecteur (401), les données d'atténuation sont disponibles sous la forme d'intensités de rayonnement associées à une bande d'énergie dans une plage d'au moins quatre bandes d'énergie du spectre de rayons X du faisceau de rayons X et constituant la signature spectrale des données d'atténuation générées par l'élément détecteur (401), et où
- le processus d'élaboration comprend les étapes d'identification de groupes de matériau homogènes (11, 21, 31) de l'objet (110), et de comparaison par un système expert entre une telle signature spectrale desdits agrégats (11, 21, 31) et la signature spectrale d'au moins un matériau cible,
**caractérisé en ce que**
un premier processus d'élaboration est appliqué aux données d'atténuation, effectuant :
a) le groupage (1302) de zones spatiales homogènes, appelées nuées (11, 21, 31) dans chaque image de bande d'énergie (1, 2) ;
b) l'agrégation (1303) de plus de nuées (11, 21, 31) appartenant à des régions spatiales correspondantes à différentes bandes d'énergie dans des super-nuées (12, 22, 32) fournissant la signature spectrale complète de cette région spatiale ;
c) l'évaluation (1306) par un système expert de la correspondance entre la signature spectrale de la super-nuée (12, 22, 32) et celle d'un matériau cible liquide ou solide ou gazeux prédéfini.

2. Procédé selon la revendication 1,
dans lequel les données d'atténuation sont disponibles sous la forme de comptages de photons, chacun étant associé à une bande d'énergie dans une plage d'au moins quatre bandes d'énergie du spectre de rayons X du faisceau de rayons X et constituant la signature spectrale des données d'atténuation générées par l'élément détecteur (401).

3. Procédé selon la revendication 1 ou 2,
dans lequel les au moins quatre bandes d'énergie sont modifiées de façon dynamique pendant le processus d'élaboration afin d'augmenter la fiabilité de la mise en correspondance entre la signature spectrale mesurée de l'objet (110) soumis à inspection et la signature spectrale du matériau cible prédéfini.

4. Procédé selon l'une quelconque des revendications 1 à 3,
dans lequel le faisceau de rayons X polychromatique est collimaté au moyen d'un collimateur primaire (212) situé entre la source de rayons X (106, 107, 210) et l'objet (110) et dirigeant le faisceau de rayons X vers l'objet (110) selon un angle prédéfini.

5. Procédé selon l'une quelconque des revendications 1 à 4,
dans lequel le détecteur (301) comprend au moins une chaîne de détecteurs à rayons X (111), composée d'éléments détecteurs (401) organisée selon au moins un ensemble linéaire.

6. Procédé selon la revendication 5,
dans lequel le système d'inspection en pourvu de deux chaînes de détecteurs ou plus (111, 112) illuminées par deux sources de rayons X ou plus (106, 107, 210) et les données acquises sont élaborées afin de générer des images radiographiques bidimensionnelles et tridimensionnelles reconstruites pour des bandes d'énergie multiples.

7. Procédé selon la revendication 6,
dans lequel un deuxième processus d'élaboration est appliqué dans le cas où plusieurs chaînes de détecteurs (111, 112) sont disponibles dans le système d'inspection, effectuant :
a) une corrélation spatiale (1402) entre les super-nuées (12, 22, 32) identifiées à partir de différentes chaînes de détecteurs (111, 112) ;
b) une corrélation spectrale (1403) entre les super-nuées (12, 22, 32) identifiées à partir de différentes chaînes de détecteurs (111, 112) ;
c) un examen (1404) par un système expert de la correspondance entre la signature spectrale de la super-nuée (12, 22, 32) et celle d'un matériau cible liquide ou solide ou gazeux prédéfini sur la base des informations dérivées des plusieurs chaînes de détecteurs (111, 112).

8. Procédé selon l'une quelconque des revendications 1 à 7,
dans lequel le système expert, au moyen de règles de proposition introduisant des contraintes molles et dures sur les solutions autorisées et élaborations statistiques sur les données d'atténuation, effectue une classification robuste en termes de correspondance de la signature spectrale de la super-nuée (12, 22, 32) et celle d'un matériau cible liquide ou solide ou gazeux prédéfini.

9. Procédé selon l'une quelconque des revendications 1 à 8,
dans lequel l'au moins une chaîne de détecteurs (111, 112) est composée de détecteurs de rayons X de type direct individuels appartenant aux familles de CdTe ou CdZnTe, ou Si, ou un autre matériau quelconque avec capture de photons similaires ayant des performances de discrimination d'énergie, et est équipée d'un collimateur secondaire (405) effectuant la protection contre le rayonnement diffusé.

10. Procédé selon l'une quelconque des revendications 1 à 9,
dans lequel l'objet (110) soumis à inspection et le détecteur de rayons X (301) sont déplacés l'un par rapport à l'autre tandis que la source de rayons X (106, 107, 210) émet un rayonnement.

11. Procédé selon l'une quelconque des revendications 1 à 10,
dans lequel la fréquence d'échantillonnage des comptages de photons de chaîne de détecteurs est mise en oeuvre à une fréquence adéquate pour soutenir le déplacement d'un tapis de transport à une vitesse supérieure à 0,5 m par seconde.

12. Procédé selon l'une quelconque des revendications 1 à 11,
dans lequel le système d'inspection est installé à un emplacement permanent, ou est déplaçable sur des roues, ou est transportable avec une station de camion mobile, ou est adapté pour une ligne de production industrielle.

13. Procédé selon l'une quelconque des revendications 1 à 12,
dans lequel le système d'inspection est utilisé dans des applications mettant en oeuvre des inspections de sécurité dans l'aviation, des bâtiments militaires et civils et des zones d'agrégation, et des inspections industrielles entre autres dans l'industrie alimentaire et pharmaceutique.

14. Appareil pour effectuer une inspection par rayons X non invasive d'objets, comprenant :
- au moins une source de rayons X (106, 107, 303) émettant un faisceau de rayons X polychromatique incident sur l'objet (110) soumis à inspection ;
- au moins un détecteur de rayons X (301) composé d'éléments détecteurs (401) situés côte à côte et capables d'intercepter le rayonnement modifié par l'objet (110) soumis à inspection et produisant, pour chaque élément détecteur (401), des données d'atténuation associées à au moins deux bandes d'énergie ;
- une unité de calcul (113) pour exécuter un processus d'élaboration sur les données d'atténuation acquises depuis l'au moins un détecteur et pour reconstruire des images radiographiques des objets soumis à inspection ainsi que des informations sur leur volume et composition,
**caractérisé en ce que**
l'appareil est agencé pour exécuter un procédé selon l'une quelconque des revendications 1 à 13.
